# EUROPEAN PATENT APPLICATION

(11) **EP 4 629 324 A1**
(43) Date of publication of application: **08.10.2025**
(21) Application number: 25154709.7
(22) Date of filing: 29.01.2025
(51) Int. Cl.: H01M 4/1391, H01M 4/04

(54) **DRY ELECTRODE AND METHOD OF MANUFACTURING THE SAME**

(30) Priority: 05.04.2024 KR 20240046472
(71) Applicant: SAMSUNG SDI CO., LTD., Yongin-si, Gyeonggi-do 17084 (KR)
(72) Inventor: Bang, Youmin, 17084 Yongin-si, Gyeonggi-do (KR); Kwon, Seunguk, 17084 Yongin-si, Gyeonggi-do (KR); Kwon, Ilkyong, 17084 Yongin-si, Gyeonggi-do (KR); Lee, Gaeon, 17084 Yongin-si, Gyeonggi-do (KR); Lee, Jinhyon, 17084 Yongin-si, Gyeonggi-do (KR); Choe, Yunju, 17084 Yongin-si, Gyeonggi-do (KR)
(74) Representative: Gulde & Partner

(57) **Abstract**

A dry electrode and a manufacturing method thereof are disclosed. The method includes providing a first positive electrode active material Liₐ₁Feₓ₁M₁₋ₓ₁PO_{4-b1}, a second positive electrode active material Liₐ₂Ni_{X2}Co_{y2}D_{z2}O_{2-b2}, a dry binder, and a dry conductive material; forming a first mixture by mixing a first portion of the first positive electrode active material, the second positive electrode active material, the dry conductive material, and the dry binder; forming a second mixture by mixing a second portion of the first positive electrode active material with the first mixture; forming a positive electrode active material layer by forming a film from the second mixture; and performing a lamination of the positive electrode active material layer on a positive electrode current collector.

## Description

### BACKGROUND

### 1. Field

One or more embodiments of the present disclosure relate to a dry electrode and a method of manufacturing the dry electrode.

### 2. Description of the Related Art

Recent industrial needs have led to active development in high-energy-density and safe batteries. For example, lithium-ion batteries are being commercialized not only in consumer electronics and communication devices but also in the automotive industry. In the automotive industry, safety is particularly emphasized because of its direct impact to human lives.

It is desirable to develop all solid-state batteries in which electrolyte solutions are replaced with solid electrolytes. Because all solid-state batteries do not use flammable organic dispersion mediums, the risk of fire or explosion, in the event of a short-circuit, may be significantly reduced. Therefore, all solid-state batteries may offer substantially enhanced safety compared to lithium-ion batters that use electrolyte solutions.

### SUMMARY

The invention is defined by the appended claims. The description that follows is subjected to this limitation. Any disclosure lying outside the scope of said claims is only intended for illustrative as well as comparative purposes.

One or more aspects of embodiments of the present disclosure are directed toward a method of manufacturing a dry electrode having flexibility while including an olivine-based lithium compound whose average particle diameter is small.

One or more aspects of embodiments of the present disclosure are directed toward a dry electrode that may recognize a state of charge (SOC) based on a voltage change during charging and/or discharging (or during charge and/or discharge).

According to one or more embodiments of the present disclosure, a method of manufacturing a dry electrode includes: providing a first positive electrode active material represented by Chemical Formula 1, a second positive electrode active material represented by Chemical Formula 2, a dry binder, and a dry conductive material (e.g., a dry electrically conductive material); optionally, grinding the dry binder at a temperature of equal to or less than 10 °C; forming a first mixture by mixing a first portion of the first positive electrode active material, the second positive electrode active material, the dry conductive material, and the (grinded) dry binder; forming a second mixture by mixing a second portion of the first positive electrode active material with the first mixture; forming a positive electrode active material layer by forming a film from the second mixture; and performing a lamination of the positive electrode active material layer on a positive electrode current collector. A ratio of a weight of the first portion to a total weight of the first portion and the second portion is in a range of 10% to 60%.

Chemical Formula 1 Liₐ₁Feₓ₁M₁₋ₓ₁PO_{4-b1}

In Chemical Formula 1, a1, x1, and b1 satisfy 0.80≤a1≤1.2, 0.950≤x1≤1.00, and 0≤b1≤0.05, and M is at least one element selected from among Al, Ti, V, and Mg.

Chemical Formula 2 Liₐ₂Niₓ₂Co_{y2}D_{z2}O_{2-b2}

In Chemical Formula 2, a2, x2, y2, z2, and b2 satisfy 0.80≤a2≤1.2, 0.60≤x2≤0.95, 0≤y2≤0.3, 0≤z2≤0.4, 0≤b2≤0.05, and x2+y2+z2=1, and D is at least one element selected from Al and Mn.

According to one or more embodiments of the present disclosure, a method of manufacturing a dry electrode may include: providing a first positive electrode active material represented by Chemical Formula 1, a second positive electrode active material represented by Chemical Formula 2, a dry binder, and a dry conductive material (e.g., a dry electrically conductive material); optionally, grinding the dry binder at a temperature of equal to or less than 10 °C; forming a first mixture by mixing a first portion of the first positive electrode active material, the second positive electrode active material, the dry conductive material, and the (grinded) dry binder; forming a second mixture by mixing a second portion of the first positive electrode active material with the first mixture; forming a positive electrode active material layer by forming a film from the second mixture; and performing a lamination of the positive electrode active material layer on a positive electrode current collector. A weight ratio of the first positive electrode active material to the second positive electrode active material may be in a range of 40:60 to 95:5.

Chemical Formula 1 Liₐ₁Feₓ₁M₁₋ₓ₁PO_{4-b1}

In Chemical Formula 1, a1, x1, and b1 satisfy 0.80≤a1≤1.2, 0.950≤x1≤1.00, and 0≤b1≤0.05, and M is at least one element selected from among Al, Ti, V, and Mg.

Chemical Formula 2 Liₐ₂Niₓ₂Co_{y2}D_{z2}O_{2-b2}

In Chemical Formula 2, a2, x2, y2, z2, and b2 satisfy 0.80≤a2≤1.2, 0.60≤x2≤0.95, 0≤y2≤0.3, 0≤z2≤0.4, 0≤b2≤0.05, and x2+y2+z2=1, and D is at least one element selected from Al and Mn.

According to one or more embodiments of the present disclosure, a dry electrode may include: a positive electrode current collector; and a positive electrode active material layer on the positive electrode current collector. The positive electrode active material layer may include: a first positive electrode active material that includes a compound represented by Chemical Formula 1 and has a first average particle diameter; a second positive electrode active material that includes a compound represented by Chemical Formula 2 and has a second average particle diameter; a dry binder; and a dry conductive material. The second average particle diameter may be greater than the first average particle diameter. An amount of the first positive electrode active material is 45 wt% to 90 wt% relative to a total weight of the first positive electrode active material and the second positive electrode active material.

Chemical Formula 1 Liₐ₁Feₓ₁M_{y1}PO_{4-b1}

In Chemical Formula 1, a1, x1, y1, and b1 satisfy 0.80≤a1≤1.2, 0.950≤x1≤1.00, 0≤y1≤0.05, 0≤b1≤0.05, and x1+y1=1, and M is at least one element selected from among Al, Ti, V, and Mg.

Chemical Formula 2 Liₐ₂Niₓ₂Co_{y2}D_{z2}O_{2-b2}

In Chemical Formula 2, a2, x2, y2, z2, and b2 satisfy 0.80≤a2≤1.2, 0.60≤x2≤0.95, 0≤y2≤0.3, 0≤z2≤0.4, 0≤b2≤0.05, and x2+y2+z2=1, and D is at least one element selected from Al and Mn.

### BRIEF DESCRIPTION OF DRAWINGS

The above and other aspects and features of certain embodiments of the present disclosure will be more apparent from the following description taken in conjunction with the accompanying drawings.
FIG. 1 is a simplified conceptual diagram showing a rechargeable lithium battery according to one or more embodiments of the present disclosure.
FIGS. 2-5 each is a simplified diagram showing a rechargeable lithium battery according to one or more embodiments of the present disclosure.
FIG. 6 is a cross-sectional view showing an all solid-state battery according to one or more embodiments of the present disclosure.
FIG. 7 is a cross-sectional view showing a positive electrode according to one or more embodiments of the present disclosure.
FIG. 8 is an enlarged view showing a positive electrode active material layer according to one or more embodiments of the present disclosure.
FIG. 9 is a flow chart showing a method of manufacturing a dry electrode according to one or more embodiments of the present disclosure.
FIGS. 10-12 each is a perspective view showing a method of manufacturing a dry electrode according to one or more embodiments of the present disclosure.
FIG. 13 is a flow chart showing a method of manufacturing a dry electrode according to one or more embodiments of the present disclosure.
FIGS. 14A-14B each is a scanning electron microscope (SEM) image correspondingly showing grinding of a dry binder according to one or more embodiments of the present disclosure.
FIGS. 15-17 each is an image showing a positive electrode active material layer manufactured according to one or more embodiments and comparative examples of the present disclosure in accordance with a method of manufacturing a dry electrode.
FIGS. 18A-18C each is a graph showing a change in voltage during charging and/or discharging (or during charge and/or discharge) of all solid-state batteries according to one or more embodiments and comparative examples of the present disclosure.

### DETAILED DESCRIPTION

In order to sufficiently understand configurations and aspects of embodiments of the present disclosure, one or more embodiments of the present disclosure will be described with reference to the accompanying drawings. It should be noted, however, that embodiments of the present disclosure are not limited to the following example embodiments and may be implemented in one or more suitable forms. Rather, the example embodiments are provided only to illustrate the subject matter of the present disclosure and let those having ordinary skill in the art fully understand the scope of the present disclosure.

In the present disclosure, it will be understood that, if (e.g., when) an element is referred to as being on another element, the element may be directly on the other element or intervening elements may be present therebetween. In some embodiments, if (e.g., when) an element is referred to as being "directly on" another element, there are no intervening elements present. In the drawings, thicknesses of some components may be exaggerated to effectively explain the technical contents of the present disclosure. Like reference numerals refer to like elements throughout the present disclosure, and duplicative descriptions thereof may not be provided for conciseness.

Unless otherwise specially noted in the present disclosure, the singular forms "a," "an," and "the" are intended to include the plural forms unless the context clearly indicates otherwise. Further, the utilization of "may" when describing embodiments of the present disclosure refers to "one or more embodiments of the present disclosure". In embodiments, unless otherwise specially noted, the phrase "A or B", "A and/or B", or "A/B" may indicate "A but not B", "B but not A", and "A and B". The terms, "comprises/includes" and/or "comprising/including" used in the present disclosure, do not exclude the presence or addition of one or more other components.

As used herein, the term "combination thereof" may refer to a mixture, a stack, a composite, a copolymer, an alloy, a blend, or a reaction product of the constituents.

Unless otherwise especially defined in the present disclosure, a particle diameter is an average particle diameter. The particle diameter indicates an average particle diameter (D₅₀) where a cumulative volume is 50 volume % (vol%) in a particle size distribution. The average particle diameter (D₅₀) may be measured by any suitable method generally used in the art, for example, by a particle size analyzer, for example, HORIBA, LA-950 laser particle size analyzer, a transmission electron microscope (TEM), and/or a scanning electron microscope (SEM). In some embodiments, a dynamic light scattering (DLS) measurement device is used to perform a data analysis, the number of particles is counted for each particle size range, and then from the data, an average particle diameter (D₅₀) value may be obtained through a calculation. In some embodiments, a laser scattering method may be utilized to measure the average particle diameter (D₅₀). In the laser scattering method, target particles are distributed in a distribution solvent, introduced into a laser scattering particle measurement device (e.g., MT3000 commercially available from Microtrac, Inc), irradiated with ultrasonic waves of 28 kHz at a power of 60 W, and then an average particle diameter (D₅₀) is calculated in the 50% standard of particle diameter distribution in the measurement device. D₅₀ refers to the average diameter (or size) of particles whose cumulative volume corresponds to 50 vol% in the particle size distribution (e.g., cumulative distribution), and refers to the value of the particle size corresponding to 50% from the smallest particle when the total number of particles is 100% in the distribution curve accumulated in the order of the smallest particle size to the largest particle size. In the present disclosure, when particles are spherical, "diameter" indicates an average particle diameter, and when the particles are non-spherical, the "diameter" indicates a major axis length.

The term "dry electrode" or "dry electrode film", utilized herein, refers to an electrode or electrode film comprising an electrode active material layer that does not include a solvent or intentionally does not utilize a solvent in the electrode preparation process. Solvents include process solvents, process solvent residues, process solvent impurities, and/or the like.

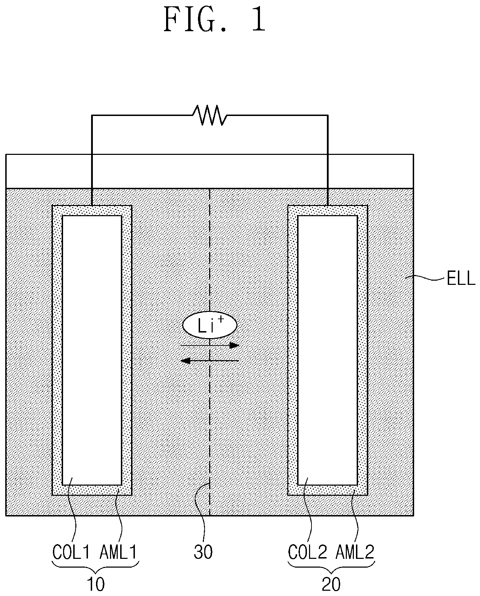

FIG. 1 illustrates a simplified conceptual diagram showing a rechargeable lithium battery according to one or more embodiments of the present disclosure. Referring to FIG. 1, a rechargeable lithium battery may include a positive electrode 10, a negative electrode 20, a separator 30, and an electrolyte solution ELL.

The positive electrode 10 and the negative electrode 20 may be spaced and/or apart (e.g., spaced apart or separated) from each other across the separator 30. The separator 30 may be arranged between the positive electrode 10 and the negative electrode 20. The positive electrode 10, the negative electrode 20, and the separator 30 may be in contact with the electrolyte solution ELL. The positive electrode 10, the negative electrode 20, and the separator 30 may be impregnated in (and/or with) the electrolyte solution ELL.

The electrolyte solution ELL may be a medium in which lithium ions are migrated and transferred between the positive electrode 10 and the negative electrode 20. In the electrolyte solution ELL, the lithium ions may move through the separator 30 toward one of (e.g., selected from among) the positive electrode 10 and the negative electrode 20.

### Positive Electrode 10

The positive electrode 10 for a rechargeable lithium battery may include a current collector COL1 and a positive electrode active material layer AML1 on the current collector COL1. The positive electrode active material layer AML1 may include a positive electrode active material (e.g., in a form of particles) and may further include a binder and/or a conductive material (e.g., an electrically conductive material).

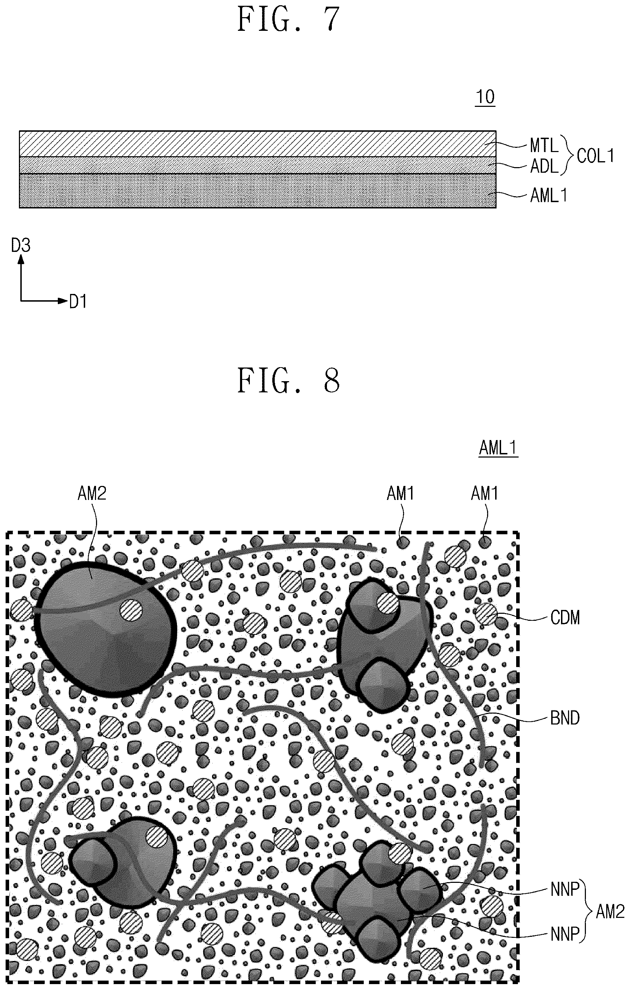

For example, the positive electrode 10 may further include an additive that may serve as a sacrificial positive electrode. The positive electrode 10 will be further discussed in more detail with reference to FIGS. 7-8.

### Negative Electrode 20

The negative electrode 20 for a rechargeable lithium battery may include a current collector COL2 and a negative electrode active material layer AML2 on the current collector COL2. The negative electrode active material layer AML2 may include a negative electrode active material (e.g., in a form of particles) and may further include a binder and/or a conductive material (e.g., an electrically conductive material).

For example, in one or more embodiments, the negative electrode active material layer AML2 may include a negative electrode active material of about 90 wt% to about 99 wt%, a binder of about 0.5 wt% to about 5 wt%, and a conductive material of about 0 wt% to about 5 wt%, based on 100 wt% of a total weight of the negative electrode active material layer AML2.

The binder may serve to improve attachment of negative electrode active material particles to each other and to improve attachment of the negative electrode active material to the current collector COL2. The binder may include a non-aqueous (e.g., water-insoluble) binder, an aqueous (e.g., water-soluble) binder, a dry binder, and/or a (e.g., any suitable) combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene (PTFE), polyvinylidene fluoride, polyethylene, polypropylene, polyamide imide, polyimide, and/or a (e.g., any suitable) combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluoro elastomer, polyethylene oxide, polyvinyl pyrrolidone, polyepichlorohydrin, polyphosphazene, poly(meth)acrylonitrile, an ethylene propylene diene copolymer, polyvinyl pyridine, chlorosulfonated polyethylene, latex, a polyester resin, a (meth)acrylic resin, a phenolic resin, an epoxy resin, polyvinyl alcohol, and/or a (e.g., any suitable) combination thereof.

If (e.g., when) an aqueous binder is used as the binder of the negative electrode, a cellulose-based compound capable of providing or increasing viscosity may further be included. The cellulose-based compound may include one or more selected from among carboxymethyl cellulose, hydroxypropylmethyl cellulose, methyl cellulose, and alkali metal salts thereof. The alkali metal may include Na, K, and/or Li.

The dry binder may include a fibrillizable polymer material, for example, polytetrafluoroethylene (PTFE), polyvinylidene fluoride, a polyvinylidene fluoride-hexafluoropropylene copolymer, polyethylene oxide, and/or a (e.g., any suitable) combination thereof.

The conductive material (e.g., electrically conductive material or electron conductor) may be used to provide an electrode with conductivity (e.g., electrical conductivity), and any suitable conductive material without causing chemical change of (e.g., that does not cause an undesirable chemical change) a battery may be used as the conductive material to constitute the battery. For example, in one or more embodiments, the conductive material may include a carbon-based material such as natural graphite, artificial graphite, carbon black, acetylene black, Ketjen black, carbon fiber, carbon nanofiber, and/or carbon nanotube; a metal powder and/or metal fiber including one or more selected from among copper, nickel, aluminum, and silver; a conductive polymer (e.g., an electrically conductive polymer) such as a polyphenylene derivative; and/or a (e.g., any suitable) mixture thereof.

The current collector COL2 may include a copper foil, a nickel foil, a stainless-steel foil, a titanium foil, a nickel foam, a copper foam, a polymer substrate coated with a conductive metal, and/or a (e.g., any suitable) combination thereof.

### Negative Electrode Active Material

The negative electrode active material in the negative electrode active material layer AML2 may include a material that may reversibly intercalate and deintercalate lithium ions, lithium metal, a lithium metal alloy, a material that may dope and de-dope lithium, and/or a transition metal oxide.

The material that may reversibly intercalate and deintercalate lithium ions may include a carbon-based negative electrode active material, for example, crystalline carbon, amorphous carbon, and/or a (e.g., any suitable) combination thereof. For example, the crystalline carbon may include graphite such as non-shaped (e.g., irregularly shaped), sheet-shaped, flake-shaped, sphere-shaped, and/or fiber-shaped natural graphite and/or artificial graphite, and the amorphous carbon may include soft carbon, hard carbon, mesophase pitch carbon, and/or calcined coke.

The lithium metal alloy may include an alloy of lithium and a metal that is selected from among sodium (Na), potassium (K), rubidium (Rb), cesium (Cs), francium (Fr), beryllium (Be), magnesium (Mg), calcium (Ca), strontium (Sr), silicon (Si), antimony (Sb), lead (Pb), indium (In), zinc (Zn), barium (Ba), radium (Ra), germanium (Ge), aluminum (Al), and/or tin (Sn).

The material that may dope and de-dope lithium may include a Si-based negative electrode active material and/or a Sn-based negative electrode active material. The Si-based negative electrode active material may include silicon, a silicon-carbon composite, SiOx (where 0<x≤2), an Si-Q alloy (where Q is an alkali metal, an alkaline earth metal, a Group 13 element, a Group 14 element (except for Si), a Group 15 element, a Group 16 element, a transition metal, a rare-earth element, and/or a (e.g., any suitable) combination thereof), and/or a (e.g., any suitable) combination thereof. The Sn-based negative electrode active material may include Sn, SnOₖ (where 0<k≤2) (e.g., SnO₂), a Sn-based alloy, and/or a (e.g., any suitable) combination thereof.

The silicon-carbon composite may be a composite of silicon and amorphous carbon (e.g., in a form of particles). According to one or more embodiments of the present disclosure, the silicon-carbon composite may have a structure in which the amorphous carbon is coated on a surface of each of the silicon particle. For example, in one or more embodiments, the silicon-carbon composite may include a secondary particle (core) in which primary silicon particles are assembled, and an amorphous carbon coating layer (shell) on a surface of the secondary particle. The amorphous carbon may also be between the primary silicon particles, and for example, the primary silicon particles may be coated with the amorphous carbon. The secondary particles may be present dispersed in an amorphous carbon matrix.

In one or more embodiments, the silicon-carbon composite may further include crystalline carbon. For example, the silicon-carbon composite may include a core including crystalline carbon and silicon particles and may also include an amorphous carbon coating layer on a surface of the core.

In one or more embodiments, the Si-based negative electrode active material and/or the Sn-based negative electrode active material may be used in combination with a carbon-based negative electrode active material.

### Separator 30

Based on a type or kind of the rechargeable lithium battery, the separator 30 may be present between the positive electrode 10 and the negative electrode 20. The separator 30 may include one or more selected from among polyethylene, polypropylene, and/or polyvinylidene fluoride and may have a multi-layered separator thereof, such as a polyethylene/polypropylene bi-layered separator, a polyethylene/polypropylene/polyethylene tri-layered separator, and/or a polypropylene/polyethylene/polypropylene tri-layered separator.

The separator 30 may include a porous substrate and a coating layer on a side or a surface (e.g., one surface or two opposite surfaces) of the porous substrate, and the coating layer may include an organic material, an inorganic material, and/or a (e.g., any suitable) combination thereof.

The porous substrate may be a layer including one selected from among polyolefin, such as polyethylene and polypropylene, polyester, such as polyethylene terephthalate and polybutylene terephthalate, polyacetal, polyamide, polyimide, polycarbonate, polyetherketone, polyaryletherketone, polyetherimide, polyamideimide, polybenzimidazole, polyethersulfone, polyphenyleneoxide, a cyclic olefin copolymer, polyphenylenesulphide, polyethylene naphthalate, a glass fiber, and polytetrafluoroethylene (PTFE) (e.g., Teflon^{™}), or may be a copolymer or a mixture including two or more thereof.

The organic material may include a polyvinylidenefluoride-based copolymer and/or a (meth)acrylic copolymer.

The inorganic material may include an inorganic particle selected from among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, Boehmite, and/or a (e.g., any suitable) combination thereof, but embodiments of the present disclosure are not limited thereto.

The organic material and the inorganic material may be present mixed in one coating layer or may be present as a stack of a coating layer including the organic material and a coating layer including an inorganic material.

### Electrolyte Solution ELL

The electrolyte solution ELL for the rechargeable lithium battery may include a non-aqueous organic solvent and a lithium salt.

The non-aqueous organic solvent may serve as a medium that transmits ions that participate in an electrochemical reaction of a battery.

The non-aqueous organic solvent may include a carbonate-based solvent, an ester-based solvent, an ether-based solvent, a ketone-based solvent, an alcohol-based solvent, an aprotic solvent, and/or a (e.g., any suitable) combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), ethyl methyl carbonate (EMC), ethylene carbonate (EC), propylene carbonate (PC), and/or butylene carbonate (BC).

The ester-based solvent may include methyl acetate, ethyl acetate, n-propyl acetate, dimethyl acetate, methyl propionate, ethyl propionate, decanolide, mevalonolactone, valerolactone, and/or caprolactone.

The ether-based solvent may include dibutyl ether, tetraglyme, diglyme, dimethoxyethane, 2-methyltetrahydrofuran, 2.5-dimethyltetrahydrofuran, and/or tetrahydrofuran. The ketone-based solvent may include cyclohexanone. The alcohol-based solvent may include ethyl alcohol and/or isopropyl alcohol. The aprotic solvent may include nitriles such as R-CN (where R is a hydrocarbon group having a C2 to C20 linear, branched, or cyclic structure and may include a double bond, an aromatic ring, or an ether group); amides such as dimethylformamide; dioxolanes such as 1,3-dioxolane and/or 1,4-dioxolane; and/or sulfolanes.

The non-aqueous organic solvent may be used alone or in a mixture of two or more thereof.

In some embodiments, if (e.g., when) a carbonate-based solvent is used, a cyclic carbonate and a chain carbonate may be mixed and used, and the cyclic carbonate and the chain carbonate may be mixed in a volume ratio of about 1:1 to about 1:9.

The lithium salt may be a material that is dissolved in the non-aqueous organic solvent to serve as a supply source of lithium ions in a rechargeable lithium battery and plays a role in enabling a basic operation of the rechargeable lithium battery and in promoting the movement of lithium ions between the positive electrode and the negative electrode. The lithium salt may include, for example, at least one selected from among LiPF₆, LiBF₄, LiSbF₆, LiAsF₆, LiClO₄, LiAlO₂, LiAlCl₄, LiPO₂F₂, LiCI, Lil, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (where x and y are integers between 1 to 20), lithium trifluoromethane sulfonate, lithium tetrafluoroethanesulfonate, lithium difluorobis(oxalato)phosphate (LiDFBOP), and/or lithium bis(oxalato) borate (LiBOB).

### Rechargeable Lithium Battery

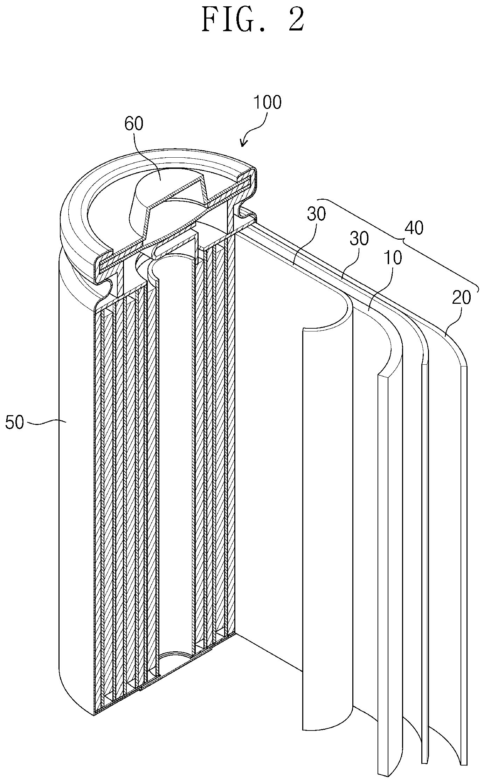

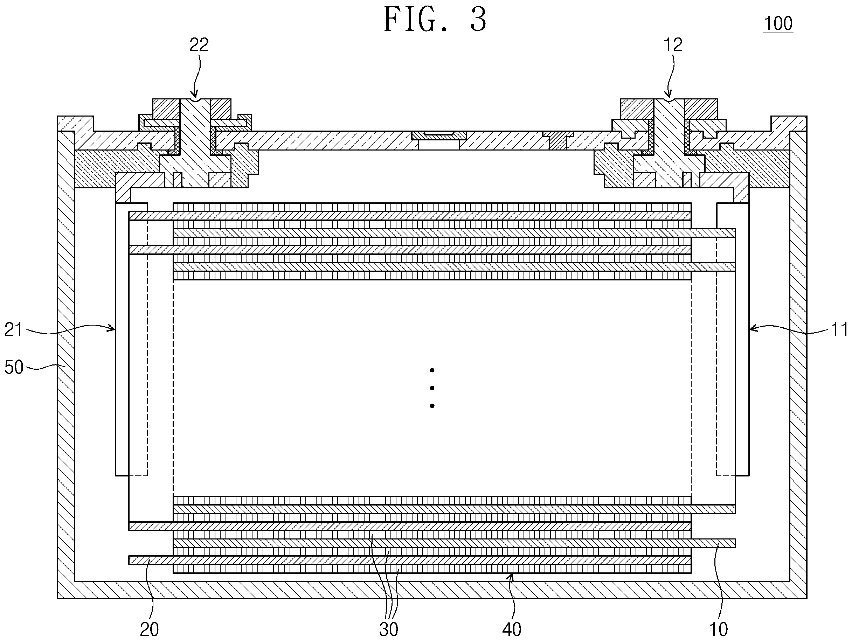

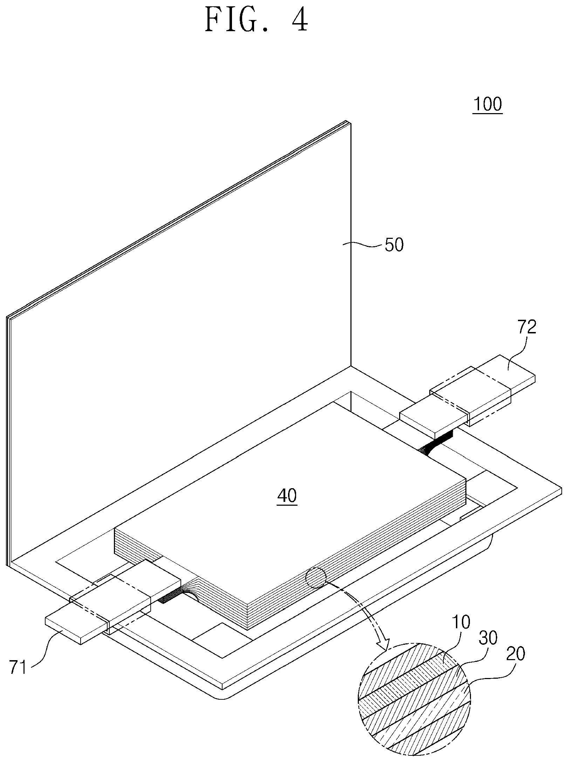

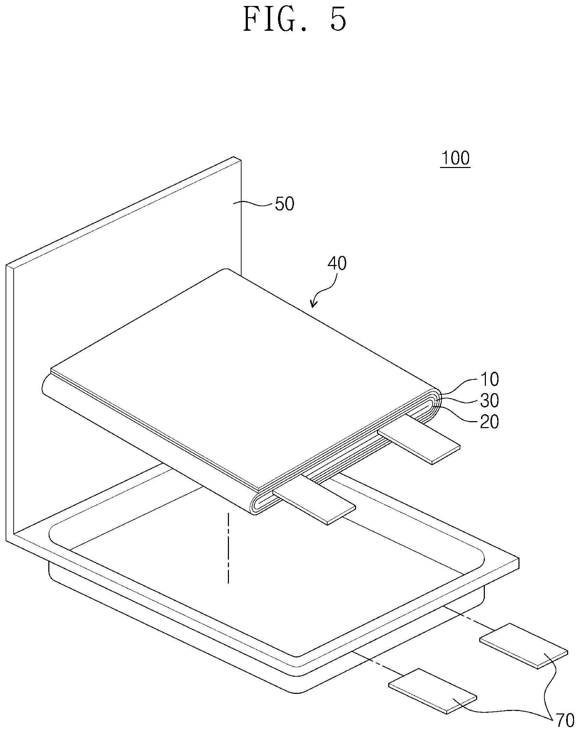

Based on the shape of a rechargeable lithium battery, the rechargeable lithium battery may be classified into cylindrical, prismatic, pouch, or coin types/kinds. FIGS. 2-5 each is a simplified diagram showing a rechargeable lithium battery according to one or more embodiments of the present disclosure, FIG. 2 shows a cylindrical battery, FIG. 3 shows a prismatic battery, and FIGS. 4-5 each show a pouch-type or kind battery. Referring to FIGS. 2-5, a rechargeable lithium battery 100 may include an electrode assembly 40 in which a separator 30 is between a positive electrode 10 and a negative electrode 20 and may also include a casing 50 in which the electrode assembly 40 is accommodated. The positive electrode 10, the negative electrode 20, and the separator 30 may be impregnated with an electrolyte solution. In some embodiments, the rechargeable lithium battery 100 may include a sealing member 60 that seals the casing 50 as illustrated in FIG. 2. In some embodiments, as illustrated in FIG. 3, the rechargeable lithium battery 100 may include a positive electrode lead tab 11, a positive electrode terminal 12, a negative electrode lead tab 21, and a negative electrode terminal 22. In some embodiments, as shown in FIGS. 4-5, the rechargeable lithium battery 100 may include an electrode tab 70, or a positive electrode tab 71 and a negative electrode tab 72, which serve(s) as an electrical path for externally inducing a current generated in the electrode assembly 40.

A rechargeable lithium battery according to one or more embodiments of the present disclosure may be applied to automotive vehicles, mobile phones, and/or any other suitable electrical devices, but embodiments of the present disclosure are not limited thereto.

### All Solid-State Battery

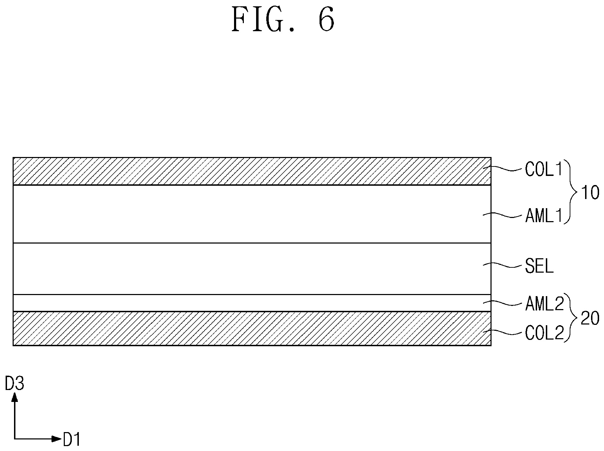

FIG. 6 is a cross-sectional view showing an all solid-state battery according to one or more embodiments of the present disclosure. In one or more embodiments of the present disclosure, the rechargeable lithium battery may be an all solid-state battery.

In some embodiments, the positive electrode active material layer AML1 may further include a solid electrolyte. The solid electrolyte may include a sulfide-based solid electrolyte having excellent or suitable lithium-ion conductivity characteristics. The sulfide-based solid electrolyte may include, for example, at least one selected from among Li₂S-P₂S₅, Li₂S-P₂S₅-LiX (where X is a halogen element), Li₂S-P₂S₅-Li₂O, LizS-PzSs-LizO-Lil, Li₂S-SiS₂, Li₂S-SiS₂-Lil, Li₂S-SiS₂-LiBr, Li₂S-SiS₂-LiCl, Li₂S-SiS₂-B₂S₃-Lil, Li₂S-SiS₂-P₂S₅-Lil, Li₂S-B₂S₃, Li₂S-P₂S₅-ZₘSₙ (where m and n are each a positive integer, and "Z" is at least one selected from among Ge, Zn, and Ga), Li₂S-GeS₂, Li₂S-SiS₂-Li₃PO₄, Li₂S-SiS₂-LiₚMO_{q} (where p and q are each a positive integer, and "M" is at least one selected from among P, Si, Ge, B, Al, Ga, and In), Li₇₋ₓPS₆₋ₓClₓ (where 0≤x≤2), Li₇₋ₓPS₆₋ₓBrₓ (where 0≤x≤2), and/or Li₇₋ₓPS₆₋ₓIₓ (where 0≤x≤2).

In some embodiments, the sulfide-based solid electrolyte may be an argyrodite-type or kind compound including, for example, at least one selected from among Li₇₋ₓPS₆₋ₓClₓ (where 0≤x≤2), Li₇₋ₓPS₆₋ₓBrₓ (where 0≤x≤2), and/or Li₇₋ₓPS₆₋ₓIₓ (where 0≤x≤2).For example, in some embodiments, the sulfide-based solid electrolyte may be an argyrodite-type or kind compound including at least one selected from among Li₆PS₅Cl, Li₆PS₅Br, and/or Li₆PS₅I.

In some embodiments, the sulfide-based solid electrolyte may be an argyrodite-type or kind compound including Li₇₋ₐMₐPS_{6-c}X_{c} (where 0≤a≤2 and 0≤c≤2). In the foregoing chemical formula, X may be F, Br, Cl, and/or a (e.g., any suitable) combination thereof. In some embodiments, M may be scandium (Sc), yttrium (Y), titanium (Ti), zirconium (Zr), hafnium (Hf), vanadium (V), niobium (Nb), tantalum (Ta), chromium (Cr), molybdenum (Mo), tungsten (W), manganese (Mn), technetium (Tc), rhenium (Re), iron (Fe), ruthenium (Ru), osmium (Os), cobalt (Co), rhodium (Rh), iridium (Ir), nickel (Ni), palladium (Pd), platinum (Pt), copper (Cu), silver (Ag), gold (Au), zinc (Zn), cadmium (Cd), mercury (Hg), aluminum (Al), gallium (Ga), indium (In), thallium (TI), silicon (Si), germanium (Ge), tin (Sn), lead (Pb), arsenic (As), antimony (Sb), bismuth (Bi), and/or a (e.g., any suitable) combination thereof.

The argyrodite-type or kind solid electrolyte may have a density of about 1.5 g/cc to about 2.0 g/cc. If (e.g., when) the argyrodite-type or kind solid electrolyte has a density of equal to or greater than about 1.5 g/cc, it may decrease an internal resistance (e.g., an internal electrical resistance) of the all solid-state battery and prevent or reduce a solid electrolyte layer from short-circuit and penetration caused by the formation of lithium dendrite. The solid electrolyte may have an elastic modulus of, for example, about 15 GPa to about 35 GPa.

The solid electrolyte included in the positive electrode active material layer AML1 may have an average particle diameter (D₅₀) less than that of a solid electrolyte included in a solid electrolyte layer SEL which will be further discussed herein. For example, in one or more embodiments, the average particle diameter (D₅₀) of the solid electrolyte included in the positive electrode active material layer AML1 may be equal to or less than about 90%, equal to or less than about 80%, equal to or less than about 70%, equal to or less than about 60%, equal to or less than about 50%, equal to or less than about 40%, equal to or less than about 30%, or equal to or less than about 20% of an average particle diameter (D₅₀) of a solid electrolyte included in a solid electrolyte layer SEL. The average particle diameter (D₅₀) may be a median diameter measured by a laser particle size distribution analyzer.

In one or more embodiments of the present disclosure, the all solid-state battery may include a solid electrolyte layer SEL instead of the electrolyte solution ELL as described in one or more embodiments of the present disclosure. The solid electrolyte layer SEL may include a solid electrolyte (e.g., a sulfide-based solid electrolyte). The sulfide-based solid electrolyte may be prepared by, for example, melting and quenching and/or mechanically milling a starting raw material such as Li₂S and/or P₂S₅. In some embodiments, the resultant may be thermally treated after the treatment as described in one or more embodiments of the present disclosure. The solid electrolyte may be in an amorphous state, a crystalline state, or a mixed state of amorphous and crystalline states. The solid electrolyte may include at least sulfur (S), phosphorus (P), and lithium (Li) among component elements included in the sulfide-based solid electrolyte described in one or more embodiments of the present disclosure. For example, the solid electrolyte may be a material including Li₂S-P₂S₅. If (e.g., when) a material including Li₂S-P₂S₅ is used as a sulfide-based solid electrolyte material of the solid electrolyte, a mixing molar ratio of Li₂S to P₂S₅ may be in a range of about 50:50 to about 90:10 (or Li₂S:P₂S₅ = about 50:50 to about 90:10).

The sulfide-based solid electrolyte may be an argyrodite-type or kind compound including, for example, at least one selected from among Li₇₋ₓPS₆₋ₓClₓ (where 0≤x≤2), Li₇₋ₓPS₆₋ₓBrₓ (where 0≤x≤2), and/or Li₇₋ₓPS₆₋ₓIₓ (where 0≤x≤2).For example, in one or more embodiments, the sulfide-based solid electrolyte may be an argyrodite-type or kind compound including at least one selected from among Li₆PS₅Cl, Li₆PS₅Br, and/or LisPSsl.

In some embodiments, the sulfide-based solid electrolyte may be an argyrodite-type or kind compound including Li₇₋ₐMₐPS_{6-c}X_{c} (where 0≤a≤2 and 0≤c≤2). In the foregoing chemical formula, X may be F, Br, Cl, and/or a (e.g., any suitable) combination thereof. In some embodiments, M may be scandium (Sc), yttrium (Y), titanium (Ti), zirconium (Zr), hafnium (Hf), vanadium (V), niobium (Nb), tantalum (Ta), chromium (Cr), molybdenum (Mo), tungsten (W), manganese (Mn), technetium (Tc), rhenium (Re), iron (Fe), ruthenium (Ru), osmium (Os), cobalt (Co), rhodium (Rh), iridium (Ir), nickel (Ni), palladium (Pd), platinum (Pt), copper (Cu), silver (Ag), gold (Au), zinc (Zn), cadmium (Cd), mercury (Hg), aluminum (Al), gallium (Ga), indium (In), thallium (TI), silicon (Si), germanium (Ge), tin (Sn), lead (Pb), arsenic (As), antimony (Sb), bismuth (Bi), and/or a (e.g., any suitable) combination thereof.

The argyrodite-type or kind solid electrolyte may have a density of about 1.5 g/cc to about 2.0 g/cc. If (e.g., when) the argyrodite-type or kind solid electrolyte has a density of equal to or greater than about 1.5 g/cc, it may decrease an internal resistance (e.g., an internal electrical resistance) of the all solid-state battery and prevent the solid electrolyte layer SEL from short-circuit and penetration (or reduce a degree or occurrence of short-circuit and penetration) caused by the formation of lithium dendrite. The solid electrolyte may have an elastic modulus of, for example, about 15 GPa to about 35 GPa.

In one or more embodiments, the solid electrolyte layer SEL may further include a binder. The binder included in the solid electrolyte layer SEL may include a styrene-butadiene rubber (SBR), polytetrafluoroethylene (PTFE), polyvinylidene fluoride, and/or polyethylene, but embodiments of the present disclosure are not limited thereto. The binder of the solid electrolyte layer SEL may be the same as or similar to that of the positive electrode active material layer AML1 or that of the negative electrode active material layer AML2.

### Dry Electrode

FIG. 7 is a cross-sectional view showing the positive electrode 10 according to one or more embodiments of the present disclosure. FIG. 8 is an enlarged view showing the positive electrode active material layer AML1 according to one or more embodiments of the present disclosure. In the following disclosure, a description of components the same as those discussed with reference to FIG. 1 may not be repeated, and a difference thereof may be discussed in more detail.

Referring to FIG. 7, a coating layer ADL may be additionally included on a side or a surface (e.g., one surface or two opposite surfaces) of the electrode current collector COL1. For example, the electrode current collector COL1 may include a metal layer MTL and a coating layer ADL.

The metal layer MTL may include any suitable material that does not react with lithium, for example, any suitable material with conductivity that does not form an alloy or compound with lithium. The metal layer MTL may include, for example, metal and/or an alloy. The metal layer MTL may be formed of, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), and/or any suitable alloy thereof. The metal layer MTL may be shaped like, for example, a sheet, a foil, a film, a plate, a porous body, a mesoporous body, a through-hole containing body, a polygonal ring body, a mesh body, a foam body, and/or a nonwoven fabric body, but embodiments of the present disclosure are not necessarily limited thereto and may encompass any suitable shape used in the art.

The coating layer ADL may be on a side or a surface (e.g., one surface or two opposite surfaces) of the metal layer MTL. Therefore, no layer may be between the metal layer MTL and the coating layer ADL. The coating layer ADL may be between the metal layer MTL and the positive electrode active material layer AML1. The presence of the coating layer ADL may increase adhesiveness between the electrode current collector COL1 and the positive electrode active material layer AML1.

For example, the coating layer ADL may have a thickness equal to or less than about 30% of that of the metal layer MTL. For example, the thickness of the coating layer ADL may be about 0.01 to 30%, about 0.1 to 30%, about 0.5 to 30%, about 1 to 25%, about 1 to 20%, about 1 to 15%, about 1 to 10%, about 1 to 5%, or about 1 to 3% of the thickness of the metal layer MTL. The thickness of the coating layer ADL may be in a range of, for example, about 10 nm to about 5 µm, about 50 nm to about 5 µm, about 200 nm to about 4 µm, about 500 nm to about 3 µm, about 500 nm to about 2 µm, about 500 nm to about 1.5 µm, or about 700 nm to about 1.3 µm. As the thickness of the coating layer ADL has the range as described in one or more embodiments of the present disclosure, there may be improvement in adhesiveness between the electrode current collector COL1 and the positive electrode active material layer AML1 and suppression or reduction in interface resistance (e.g., interface electrical resistance).

The coating layer ADL may include, for example, a binder. As the coating layer ADL includes a binder, there may be more improvement in adhesiveness between the electrode current collector COL1 and the positive electrode active material layer AML1. The binder included in the coating layer ADL may be, for example, a conductive binder or a nonconductive binder. The conductive binder may be, for example, an ionically conductive binder and/or an electronically conductive binder. A binder having both (e.g., simultaneously) ionic conductivity and electronic conductivity may be classified as both (e.g., simultaneously) an ionically conductive binder and an electronically conductive binder.

The ionically conductive binder may include, for example, one or more selected from among polystyrene sulfonate (PSS), a polyvinylidene fluoride-hexafluoropropylene copolymer (PVDF-HFP), polyvinyl fluoride (PVF), polyvinylidene fluoride (PVDF), poly(methyl methacrylate) (PMMA), polyethylene oxide (PEO), polyethylene glycol (PEG), polyacrylonitrile (PAN), polytetrafluoroethylene (PTFE), polyethylene dioxythiophene (PEDOT), polypyrrole (PPy), polyaniline, and polyacetylene. The ionically conductive binder may include a polar functional group. The ionically conductive binder containing a polar functional group may include, for example, one or more selected from among Nation^{™}, Aquivion^{™}, Flemion^{™}, Gore^{™}, Aciplex^{™}, Morgane ADP^{™}, sulfonated poly(ether ether ketone) (SPEEK), sulfonated poly(arylene ether ketone ketone sulfone) (SPAEKKS), sulfonated poly(aryl ether ketone) (SPAEK), poly[bis(benzimidazobenzisoquinolinones)] (SPBIBI), poly(styrene sulfonate) (PSS), and/or lithium 9,10-diphenylanthracene-2-sulfonate (DPASLi⁺).

The electronically conductive binder may include, for example, one or more selected from among polyacetylene, polythiophene, polypyrrole, poly(p-phenylene), poly(phenylenevinylene), poly(phenylene sulfide), and/or polyaniline. The coating layer ADL may be, for example, a conductive layer including a conductive polymer (e.g., an electrically conductive polymer).

The binder included in the coating layer ADL may be selected from, for example, that included in the positive electrode active material layer AML1. The coating layer ADL may include the same binder as that of the positive electrode active material layer AML1. The coating layer ADL may include, for example, a fluorine-based binder. The fluorine-based binder included in the coating layer ADL may include, for example, polyvinylidene fluoride (PVDF). The coating layer ADL may be dry-disposed (e.g., dry-arranged) or wet-disposed (e.g., wet-arranged) on the metal layer MTL. The coating layer ADL may be, for example, a binding layer containing a binder.

The coating layer ADL may include, for example, a carbon-based conductive material (e.g., a carbon-based electrically conductive material). The carbon-based conductive material included in the coating layer ADL may be selected from that included in the positive electrode active material layer AML1. The coating layer ADL may include the same carbon-based conductive material as that of the positive electrode active material layer AML1. As the coating layer ADL includes a carbon-based conductive material, the coating layer ADL may be a conductive layer (e.g., an electrically conductive layer). For example, the coating layer ADL may be a conductive layer containing a binder and a carbon-based conductive material.

Referring to FIG. 8, the positive electrode active material layer (e.g., AML1 of FIG. 7) includes a first positive electrode active material AM1, a second positive electrode active material AM2, a conductive material CDM (e.g., an electrically conductive material CDM), and a binder BND.

The first positive electrode active material AM1 may be provided in the form of a single particle. In one or more embodiments of the present disclosure, the term "single particle" may denote an individual particle without a grain boundary therein. The single particle may indicate one particle, a monolith structure, a single unitary structure, or a non-aggregated particle, in which particles are not aggregated together with one another but present as an independent phase in terms of morphology. For example, the single particle may be a single crystal. In some embodiments, the single particle may be a particle containing several crystals. The single particle may be independently divided. In some embodiments, the single particle may have a shape in which two to 100 independent particles are attached to each other.

The first positive electrode active material AM1 may be a nano-shaped positive electrode active material. The first positive electrode active material AM1 may include at least one primary particle. In an embodiment, the first positive electrode active material AM1 may include primary particles that are aggregated into almost a spherical shape (e.g., a generally spherical shape). The first positive electrode active material AM1 may not be spherical even if (e.g., when) primary particles are aggregated. For example, the first positive electrode active material AM1 may have a random shape (e.g., may an amorphous shape).

The first positive electrode active material AM1 may be provided in one or more suitable sizes. For example, the first positive electrode active material AM1 may have a first average particle diameter of 100 nm to 2.5 µm, 500 nm to 2 µm, or 1 µm to 2 µm. The first positive electrode active material AM1 may have a minimum particle diameter, or a particle diameter of a primary particle, of 50 nm to 500 nm or 100 nm to 200 nm.

The average particle diameter is measured by a particle size analyzer. The average particle diameter refers to a diameter (D₅₀) of particles having a cumulative volume of 50 vol% in particle size distribution.

The minimum particle diameter, or a particle diameter of a primary particle, refers to a diameter measured by randomly selecting approximately 30 primary particles from an electron microscope image of the first positive electrode active material AM1.

The first positive electrode active material AM1 includes an olivine-based lithium compound represented by Chemical Formula 1:

Chemical Formula 1 Liₐ₁Feₓ₁M₁₋ₓ₁PO_{4-b1}

In Chemical Formula 1, a1, x1, and b1 satisfy 0.80≤a1≤1.2, 0.950≤x1≤1.00, and 0≤b1≤0.05. M may be at least one element selected from among Al, Ti, V, and Mg. M may be a dopant doped in the first positive electrode active material AM1.

Similar to the first positive electrode active material AM1, a second positive electrode active material AM2 may be shaped like a single particle. A description of the single particle may be identical or similar to the description in the first positive electrode active material AM1. In an embodiment, the second positive electrode active material AM2 may be shaped like a single particle. In some embodiments, the second positive electrode active material AM2 may have a shape in which a plurality of single particles NNP are attached to each other. A positive electrode active material according to one or more embodiments of the present disclosure may include the second positive electrode active material AM2 shaped like a single particle, and thus, a rechargeable battery may achieve a high capacity and a high energy density.

The second positive electrode active material AM2 may have a second average particle diameter of 2 µm to 15 µm, 2 µm to 10 µm, or 2 µm to 5 µm. The second average particle diameter of the second positive electrode active material AM2 may be greater than the first average particle diameter of the first positive electrode active material AM1. If the second positive electrode active material AM2 includes a plurality of single particles NNP, the single particle NNP of the second positive electrode active material AM2 may have an average size greater than the first average particle diameter of the first positive electrode active material AM1.

The average particle diameter is measured by a particle size analyzer. An average particle diameter refers to a diameter (D₅₀) of particles having a cumulative volume of 50 vol% in particle size distribution.

The second positive electrode active material AM2 may include a lithium nickel-based composite oxide as a nickel-based active material. For example, the second positive electrode active material AM2 may include a high nickel-based positive electrode active material containing a high amount of nickel. The high nickel-based positive electrode active material may achieve high capacity and high performance.

The second positive electrode active material AM2 includes layer-structured lithium nickel-based composite oxide represented by Chemical Formula 2:

Chemical Formula 2 Liₐ₂Niₓ₂Co_{y2}D_{z2}O_{2-b2}

In Chemical Formula 2, a2, x2, y2, z2, and b2 satisfy 0.80≤a2≤1.2, 0.60≤x2≤0.95, 0≤y2≤0.3, 0≤z2≤0.4, 0≤b2≤0.05, and x2+y2+z2=1. For example, a2, x2, y2, z2, and b2 may satisfy 0.80≤a2≤1.2, 0.60≤x2≤0.95, 0≤y2≤0.05, 0≤z2≤0.4, and 0<b2≤0.05. D is at least one element selected from Al and Mn.

The amount of the positive electrode active materials in the positive electrode active material layer AML1, (e.g., the amount of the first positive electrode active material AM1 and the second positive electrode active material AM2) may be 90 wt% to 99 wt% relative to 100 wt% of a total weight of the positive electrode active material layer AML1.

The first positive electrode active material AM1 and the second positive electrode active material AM2 may have a weight ratio of 40:60 to 95:5. If the weight ratio satisfies the range above, a state of charge (SOC) based on a change in voltage may be recognizable even if lithium iron phosphate, LFP (i.e. the first positive electrode active material AM1) is used. In some embodiments, it may also be possible to provide a positive electrode active material and a rechargeable lithium battery that exhibit economical efficiency and excellent performance according to one or more embodiments of the present disclosure.

The binder BND may serve to improve attachment of positive electrode active material particles to each other and to improve attachment of the positive electrode active material to the current collector COL1..

For example, in one or more embodiments, the binder BND is a dry binder. The dry binder BND is defined to refer to a binder that is not impregnated, dissolved, or dispersed in a solvent. For example, the dry binder BND may be a binder that does not include a solvent or does not contact a solvent.

The dry binder BND may be, for example, a fibrillated binder. The fibrillated binder may serve as a matrix that supports and binds an electrode active material and other components included in an electrode active material layer. For example, a scanning electron microscope image of an electrode cross-section may be used to ascertain that the fibrillated binder has a fibrous morphology. The fibrillated binder may have an aspect ratio of equal to or greater than about 10, equal to or greater than about 20, equal to or greater than about 50, or equal to or greater than about 100.

The dry binder BND may include at least one selected from among polytetrafluoroethylene (PTFE), a polyvinylidene fluoride-hexafluoropropylene (PVDF-HFP) copolymer, polyvinylidene fluoride (PVDF), polyvinyl alcohol (PVA), polyacrylonitrile (PAN), carboxymethyl cellulose (CMC), starch, hydroxypropyl cellulose, cellulose, polyvinylpyrrolidone (PVP), polyethylene (PE), polypropylene (PP), an ethylene-propylene-diene polymer (EPDM), sulfonated EPDM, a styrene-butadiene rubber (SBR), and a fluoro rubber.

The dry binder BND may include a fluorine-based binder. The fluorine-based binder includes at least one selected from among polytetrafluoroethylene (PTFE), a polyvinylidene fluoride-hexafluoropropylene (PVDF-HFP) copolymer, and/or polyvinylidene fluoride (PVDF).

The conductive material CDM may be used to provide an electrode with conductivity (e.g., electrical conductivity), and any suitable conductive material without causing chemical change (e.g., that does not cause an undesirable chemical change) of batteries may be used as the conductive material to constitute batteries. The conductive material CDM may include, for example, a carbon-based material, such as natural graphite, artificial graphite, carbon black, acetylene black, Ketjen black, carbon fiber, carbon nanofiber, and/or carbon nanotube; a metal powder and/or metal fiber containing one or more selected from among copper, nickel, aluminum, and silver; a conductive polymer (e.g., an electrically conductive polymer) such as a polyphenylene derivative; and/or a (e.g., any suitable) mixture thereof.

The conductive material CDM is a dry conductive material. The dry conductive material CDM is defined to refer to a conductive material that is not impregnated, dissolved, or dispersed in a solvent. For example, the dry conductive material CDM may be a conductive material that does not include a solvent or does not contact a solvent.

The dry conductive material CDM may include, for example, a carbon-based material, a metal-based material, and/or a (e.g., any suitable) combination thereof. The carbon-based material may include carbon black, graphite particles, natural graphite, artificial graphite, acetylene black, Ketjen black, carbon fiber, and/or carbon nanotube.

Amounts of the binder BND and the conductive material CDM may be 0.5 wt% to 5 wt% relative to 100 wt% of the positive electrode active material layer AML1. If the amount of the binder BND satisfies the range, an electrode binding force may be increased, and a high electrode energy density may be maintained. If the amount of the conductive material CDM satisfies the range, electrode conductivity may be increased, and a high electrode energy density may be maintained.

### Method of Manufacturing Dry Electrode

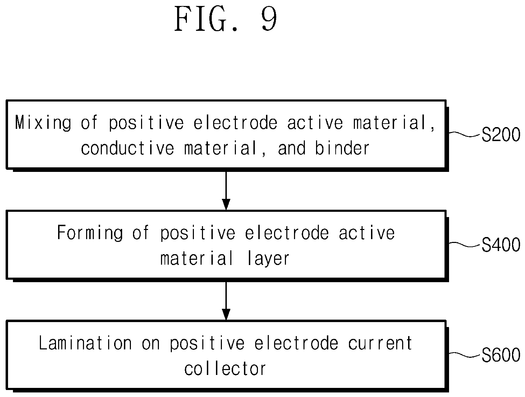

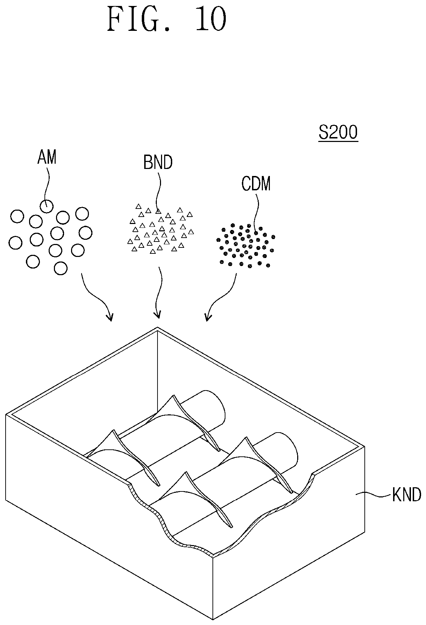

FIG. 9 is a flow chart showing a method of manufacturing a dry electrode according to one or more embodiments of the present disclosure. FIGS. 10-12 each is a perspective view showing the method of manufacturing a dry electrode.

Referring to FIG. 9, a method of manufacturing a dry electrode includes mixing an electrode active material, a conductive material (e.g., an electrically conductive material), and a binder (S200), allowing the mixture to be thin to form an electrode active material layer (S400) (e.g., forming a film from the mixture to form the electrode active material layer), and performing a lamination of the electrode active material layer on an electrode current collector (S600).

Referring to FIG. 10, an electrode active material AM, a conductive material CDM (e.g., an electrically conductive material CDM), and a binder BND are dry-mixed to form a dry mixture (S200). The dry mixing refers to mixing without using a process solvent. The process solvent may be, for example, a solvent used in preparing an electrode slurry..

The conductive material CDM and the binder BND are a dry conductive material (e.g., a dry electrically conductive material) and a dry binder, respectively. The electrode active material AM is a dry electrode active material.

An agitator KND may be used to perform the dry mixing at a temperature of about 25 °C to about 65 °C. For example, the agitator KND may be used to perform the dry mixing at a rotational speed ranging from about 10 rpm to about 10,000 rpm or from about 100 rpm to about 10,000 rpm. The agitator KND may be used to perform the dry mixing for about 1 minute to about 200 minutes or about 1 minute to about 150 minutes.

The agitator KND may be, for example, a kneader. The agitator KND may include, for example, a chamber, one or more rotary shafts provided in the chamber, and a blade rotatably coupled to the rotary shaft and provided in a longitudinal direction of the rotary shaft. The blade may be, for example, at least one selected from among a ribbon blade, a sigma blade, a Z blade, a dispersing blade, and a screw blade. As the blade is included, the electrode active material layer AM, the dry conductive material, and the dry binder BND may be effectively mixed with each other even without any solvent. For example, a dough-like dry mixture may be prepared.

A plasticizer and/or a pore former may be further added to the dry mixture to form a pore in an electrode plate.

The types/kinds and amounts of the electrode active material AM, the conductive material CDM, and the binder BND used in the dry mixture may be as described in one or more embodiments of the present disclosure.

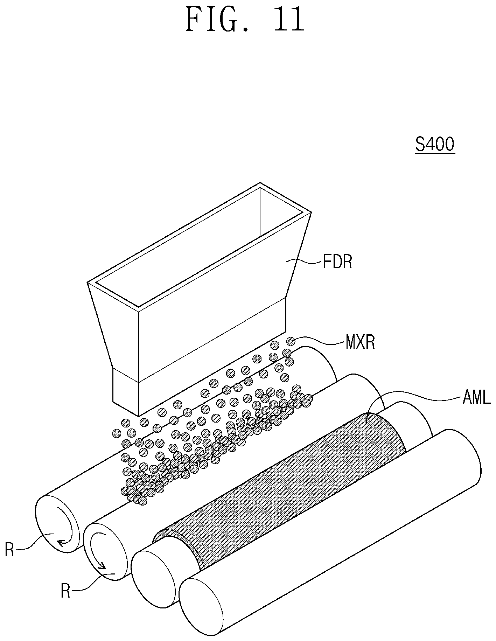

Referring to FIG. 11, a dry mixture MXR may become thin to form an electrode active material layer AML (S400) (e.g., a thin film may be formed from the dry mixture MXR to form the electrode active material layer AML). The dry mixture MXR may be introduced from a feeder FOR into an extrusion device to be extruded in the form of a sheet or film. For example, the extrusion device may include a pair of rollers R. The dry mixture MXR may be introduced into a gap between the pair of rollers R.

For example, this step (e.g., act or task) may be performed at a temperature of about 25 °C to about 150 °C under a pressure of about 3 kilonewtons (kN) to about 80 kN. Thus, the film-shaped electrode active material layer AML may be formed.

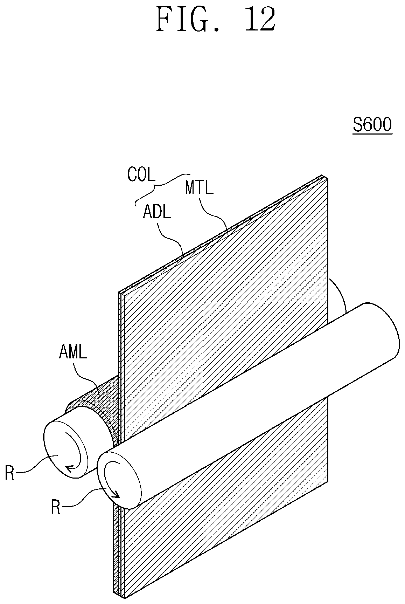

Referring to FIG. 12, the electrode active material layer AML is laminated on an electrode current collector COL (S600). This step may include providing the electrode current collector COL. A material of the electrode current collector COL may be as described in one or more embodiments of the present disclosure.

For example, the step of providing the electrode current collector COL may include providing a metal layer MTL and placing a coating layer ADL on a side or a surface (e.g., one surface or two opposite surfaces) of the metal layer MTL. A material of the metal layer MTL may be as described in one or more embodiments of the present disclosure.

The coating layer ADL may be dry-disposed (e.g., dry-arranged) or wet-disposed (e.g., wet-arranged) on a side or a surface (e.g., one surface or two opposite surfaces) of the metal layer MTL. For example, a deposition process, such as chemical vapor deposition (CVD) and/or physical vapor deposition (PVD) may allow the coating layer ADL to be dry-disposed (e.g., dry-arranged) on the metal layer MTL. For example, a spin coating or a dip coating may allow the coating layer ADL to be wet-disposed (e.g., wet-arranged) on the metal layer MTL. For example, a carbon-based conductive material (e.g., a carbon-based electrically conductive material) may be deposited to form the coating layer ADL on the metal layer MTL. The dry-coated coating layer ADL may be formed of a carbon-based conductive material and may include no binder. In some embodiments, a composition including a carbon-based conductive material, a binder, and a solvent may be coated and dried on a surface of the metal layer MTL to form the coating layer ADL on the metal layer MTL. The coating layer ADL may have a single-layered structure or a multi-layered structure including a plurality of layers.

The electrode active material layer AML may be provided on a side or a surface (e.g., one surface or two opposite surfaces) of the electrode current collector COL, thereby manufacturing an electrode. For example, the electrode may be manufactured by performing a lamination of the electrode active material layer AML on the electrode current collector COL. The lamination may use a roll press and/or a plate press, but embodiments of the present disclosure are not limited thereto.

For example, the lamination may be performed at a temperature of about 50 °C to about 130 °C under a pressure of about 3 kN to about 40 kN. Thus, the electrode active material layer AML may be closely and tightly adhered to the electrode current collector COL.

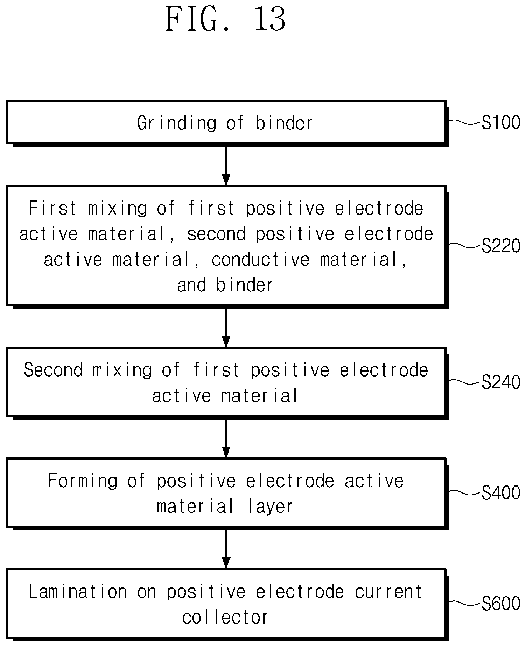

FIG. 13 is a flow chart showing a method of manufacturing a dry electrode according to one or more embodiments of the present disclosure. In the following disclosure, a description of components the same as those described with reference to FIGS. 9-12 may not be repeated, and a difference thereof may be described in more detail.

Referring to FIG. 13, a method of manufacturing a dry electrode according to one or more embodiments of the present disclosure may include grinding a dry binder (S100), allowing a first portion of a first positive electrode active material, a second positive electrode active material, a dry conductive material, and the grinded dry binder to mix with each other to form a first mixture (S220), allowing a second portion of the first positive electrode active material to mix to form a second mixture (S240), allowing the second mixture to be filmed to form an electrode active material layer (S400) (e.g., forming a film from the second mixture to form the electrode active material layer), and performing a lamination of the electrode active material layer on an electrode current collector (S600).

The dry binder BND may be grinded at low temperatures (S100). For example, the dry binder BND may be grinded at a temperature of equal to or less than 10 °C, a temperature of -30 °C to 10 °C. If the dry binder BND is grinded at the temperature range above, the dry binder BND may be suitably or sufficiently grinded and dispersed before being mixed with positive electrode active materials, and the dry binder BND may be uniformly (e.g., substantially uniformly) mixed with positive electrode active materials.

The dry binder BND may undergo a low-temperature grinding to reduce an average particle diameter. For example, the dry binder BND before fibrillation may include particles whose average particle diameter is greater than 500 µm. The low-temperature grinding may cause the dry binder BND to have an average particle diameter reduced to equal to or less than 100 µm or reduced to 50 µm to 100 µm. If (e.g., when) the dry binder BND is grinded to the average particle diameter range, the dry binder BND may be effectively stretched.

The dry mixing (see S200 of FIG. 9) may be performed once or more. For example, the dry mixing S200 may include allowing a first portion of a first positive electrode active material, a second positive electrode active material, a dry conductive material, and the (grinded) dry binder to mix with each other to form a first mixture (S220) and allowing a second portion of the first positive electrode active material to mix with the first mixture to form a second mixture (S240). Accordingly, the first positive electrode active material may be introduced individually in portions.

As the first positive electrode active material includes olivine-based lithium compound particles whose average particle diameter is small, the use of the first positive electrode active material may make it difficult to manufacture a flexible dry electrode. The first positive electrode active material may be added separately in a first stage and/or a second stage, and the second positive electrode active material whose average particle diameter is greater than that of the first positive electrode active material may be together mixed to manufacture a flexible positive electrode active material layer.

The first positive electrode active material is divided into a first portion and a second portion. The first portion is 10 wt% to 60 wt% relative to the total weight of the first positive electrode active material. Accordingly, the second portion is 40 wt% to 90 wt% relative to the total weight of the first positive electrode active material. In some embodiment, the second portion may have a weight greater than that of the first portion.

The first portion of the first positive electrode active material, the second positive electrode active material, the dry conductive material, and the (grinded) dry binder are first dry-mixed to form a first mixture (S220). In this step, the first portion of the first positive electrode active material is added.

For example, the first dry mixing may be performed for about 15 minutes or less at a rotational speed of about 2,000 rpm or less under a temperature of about 25 °C to about 65 °C. For another example, the first dry mixing may be performed for about 5 minutes to about 15 minutes at a rotational speed of about 500 rpm to about 2,000 rpm under a temperature of about 25 °C to about 65 °C. The first dry mixing may uniformly (e.g., substantially uniformly) mix the first positive electrode, the second positive electrode active material, the dry conductive material, and the dry binder.

The second portion of the first positive electrode active material is dry-mixed with the first mixture to prepare a second mixture. The second dry mixing may be performed for about 10 minutes or more at a rotational speed of about 4,000 rpm or more under a temperature of about 25 °C to about 65 °C. The second dry mixing may be performed for about 10 minutes to about 60 minutes at a rotational speed of about 4,000 rpm to about 9,000 rpm under a temperature of about 25 °C to about 65 °C. The second dry mixing may obtain a dry mixture including a fibrillated dry binder.

A total weight of the first positive electrode active material and the second positive electrode active material may be about 90 wt% to about 99 wt% relative to the total weight of the first positive electrode active material, the second positive electrode active material, the dry binder, and the dry conductive material. The weight of each of the dry binder and the dry conductive material may be about 0.5 wt% to about 5 wt% of the total weight of the first positive electrode active material, the second positive electrode active material, the dry binder, and the dry conductive material.

The first positive electrode active material and the second positive electrode active material may have a weight ratio of 40:60 to 95:5. If the weight ratio of the first positive electrode active material to the second positive electrode active material satisfies the range, a flexible dry electrode may be manufactured.

A ratio of the weight of the first portion to the total weight of the first portion of the first positive electrode active material and the second portion of the first positive electrode active material ranges from 10% to 60%. For example, the ratio of the weight of the first portion to the total weight of the first portion of the first positive electrode active material and the second portion of the first positive electrode active material may range from 10% to 50%, 10% to 30%, 10% to 20%, or 10% to 15%. If the weight ratio of the first portion satisfies the range above, it obtain the first mixture and the second mixture in each of which the first positive electrode active material, the second positive electrode active material, the dry binder, and the dry conductive material are uniformly (e.g., substantially uniformly) dispersed without phase separation, and also to manufacture the flexible dry electrode.

Herein, the subject matter of the present disclosure may be described in more detail with reference to Embodiments. The following Embodiments are provided for illustrative purposes only and are not to be construed to limit the scope of the present disclosure.

### Embodiment 1: Preparation of Positive Electrode Active Material Layer

Polytetrafluoroethylene (PTFE) as the dry binder was grinded at a rotational speed of 8,000 rpm under a temperature of 10 °C.

LiFePO₄ (average particle diameter: 1.5 *µ*m) was used as a first portion and a second portion of the first positive electrode active material. LiNi_{0.91}Co_{0.05}Al_{0.04}O₂ (average particle diameter: 3.5 *µ*m) was used as the second positive electrode active material. The first portion of the first positive electrode active material, the second positive electrode active material, the grinded PTFE, and the dry conductive material were mixed to prepare a first mixture (first dry mixing). A kneader was used to perform the first dry mixing for 10 minutes at a rotational speed of 1,000 rpm under a temperature of 40 °C.

The second portion of the first positive electrode active material was mixed with the first mixture to prepare a second mixture (second dry mixing). A kneader was used to perform the second dry mixing for 30 minutes at a rotational speed of 7,000 rpm under a temperature of 40 °C.

In the first dry mixing and the second dry mixing, the positive electrode active materials (e.g., the first positive electrode active material and the second positive electrode active material), the grinded PTFE, and the dry conductive material were mixed in a weight ratio of 96:2:2. A weight ratio of the first positive electrode active material to the second positive electrode active material was 90:10. In the first dry mixing, 10% was given as a ratio of the weight of the first portion to the total weight of the first portion of the first positive electrode active material and the second portion of the first positive electrode active material.

The prepared second mixture was introduced between a pair of rollers and filmed to prepare a positive electrode active material layer. The filming was performed at a temperature of 100 °C under a pressure of 10 kN.

### Embodiment 2: Preparation of Positive Electrode Active Material Layer

A positive electrode active material layer was prepared in the same method as in Embodiment 1, except that a weight ratio of the first positive electrode active material to the second positive electrode active material was 75:25 in the first dry mixing and the second dry mixing.

### Comparative Example 1: Preparation of Positive Electrode Active Material Layer

A positive electrode active material layer was prepared in the same method as in Embodiment 1, except that, in the first dry mixing, 5% was given as a ratio of the weight of the first portion to the total weight of the first portion of the first positive electrode active material and the second portion of the first positive electrode active material.

### Comparative Example 2: Preparation of Positive Electrode Active Material Layer

A positive electrode active material layer was prepared in the same method as in Embodiment 1, except that, in the first dry mixing, 70% was given as a ratio of the weight of the first portion to the total weight of the first portion of the first positive electrode active material and the second portion of the first positive electrode active material.

### Comparative Example 3: Preparation of Positive Electrode Active Material Layer

A positive electrode active material layer including only the first positive electrode active material was prepared. The positive electrode active material layer was prepared in the same method as in Embodiment 1, except that the second positive electrode active material was not included at all.

### Comparative Example 4: Preparation of Positive Electrode Active Material Layer

A positive electrode active material layer including only the second positive electrode active material was prepared. The positive electrode active material layer was prepared in the same method as in Embodiment 1, except that the first positive electrode active material was not included at all.

### Manufacturing of Positive Electrode

A positive electrode was manufactured by performing a lamination of the prepared positive electrode active material layer on a positive electrode current collector having a coating layer arranged on one surface thereof. The lamination was performed at a temperature of 80 °C under a pressure of 5 kN.

### Fabrication of Rechargeable Lithium Battery

Metal lithium was used as a counter electrode with respect to the positive electrode, and 1.1 M LiPF₆ was added to a solvent containing ethylene carbonate (EC), ethylmethyl carbonate (EMC), and dimethyl carbonate (DMC) mixed in a volume ratio of 3:5:2 to prepare an electrolyte solution.

A battery assembly was formed by placing a separator formed of a porous polyethylene (PE) film between the positive electrode and the negative electrode, the battery assembly was compressed and accommodated in a battery casing, and then the electrolyte solution was introduced to fabricate a rechargeable lithium battery (coin half cell, 2032 type or kind).

### Experimental Example 1: SEM Images Before and After Grinding of Binder

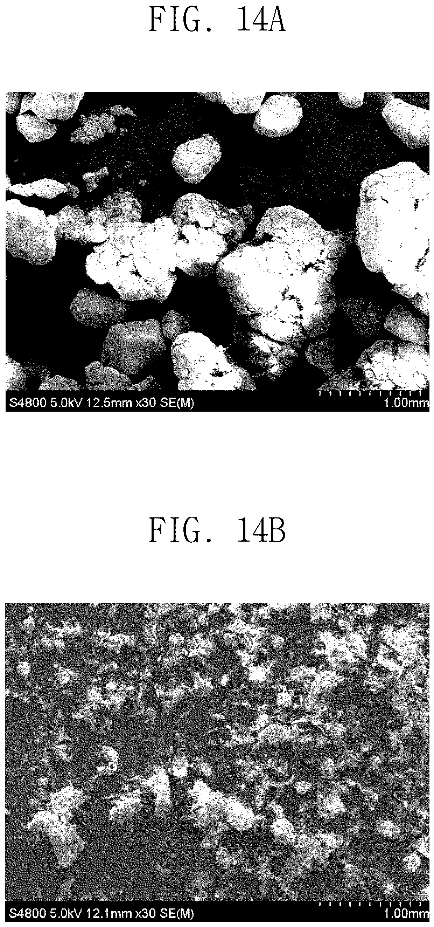

FIGS. 14A-14B each depicts a scanning electron microscope (SEM) image of the dry binder (polytetrafluoroethylene: PTFE) before and after being grinded at a rotational speed of 8,000 rpm under a temperature of 10 °C. Referring to FIGS. 14A-14B, it was observed that an average particle diameter of the dry binder before being grinded was greater than 500 µm, but an average particle diameter of the dry binder after being grinded was reduced to less than 100 µm.

### Experimental Example 2: Image of Prepared Positive Electrode Active Material Layer

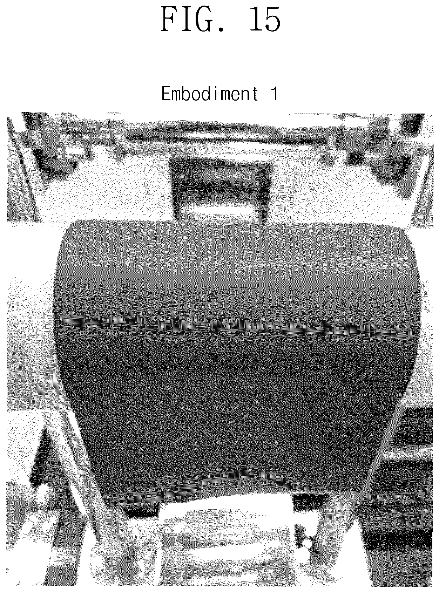

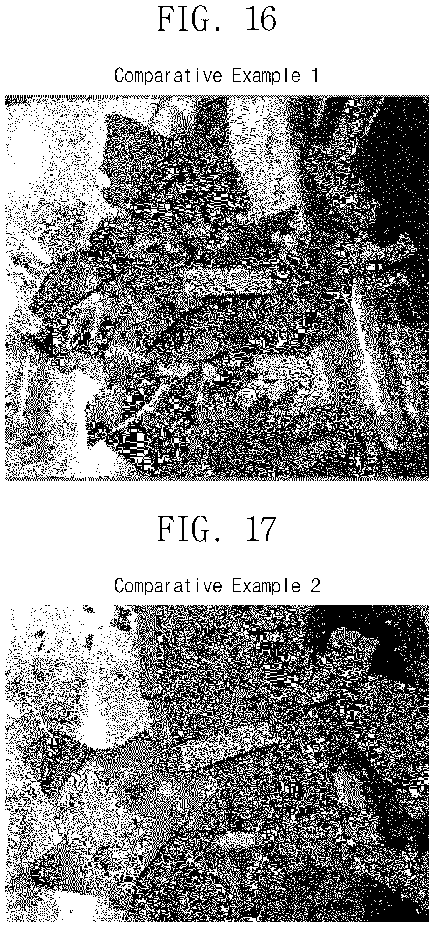

FIGS. 15-17 each depicts an image of the positive electrode active material layer according to Embodiment 1 and Comparative Examples 1 and 2. Referring to FIGS. 15-17, it was ascertained that, unlike the positive electrode active material layers of Comparative Examples 1 and 2, the positive electrode active material layer of Embodiment 1 was prepared by the method of manufacturing a dry electrode as described in one or more embodiments of the present disclosure, and that a flexible positive electrode active material layers was prepared.

### Experimental Example 3: Voltage Change during Charge/Discharge

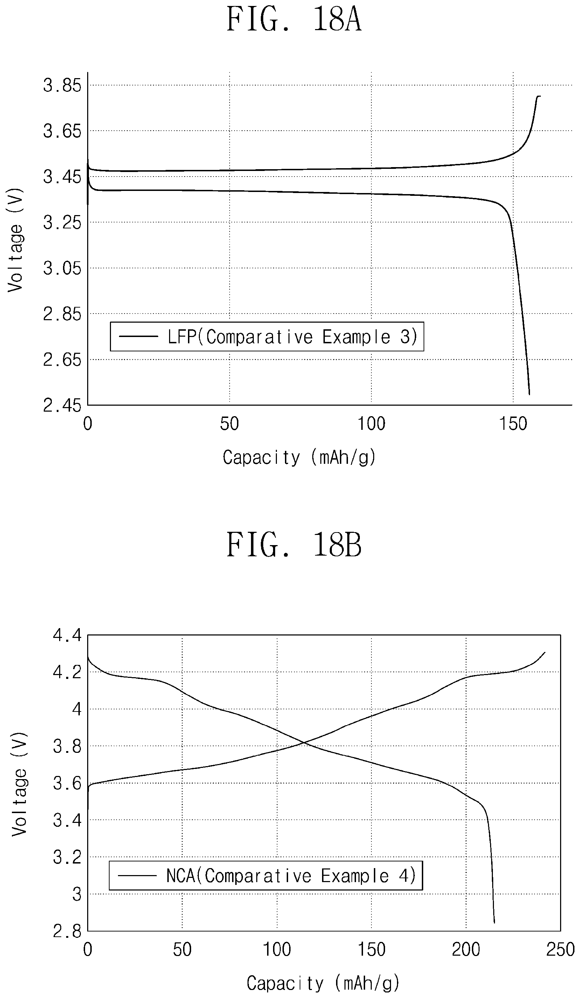

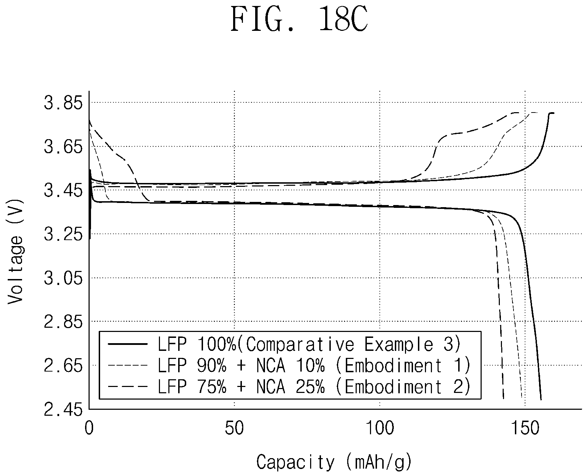

FIGS. 18A-18C each shows a change in voltage measured during charging and/or discharging of all solid-state batteries fabricated by using the positive electrode active material layers of Embodiments 1 and 2 and Comparative Examples 3 and 4. Referring to FIG. 18A, because the all solid-state battery fabricated by using the positive electrode active material layer of Comparative Example 3 exhibits a voltage plateau section during charging and/or discharging, it was difficult to recognize a state of charge (SOC) based on the voltage change. Referring to FIGS. 18B-18C, the all solid-state batteries fabricated by using the positive electrode active material layers of Embodiments 1 and 2 may exhibit a voltage change caused by charge and/or discharge and recognize a state of charge (SOC).

In a method of manufacturing a dry electrode according to one or more embodiments of the present disclosure, it may be possible to prepare a positive electrode active material layer that includes an olivine-based lithium compound, has a uniform composition without phase separation, and exhibits flexibility.

A dry electrode according to one or more embodiments of the present disclosure may recognize a state of charge based on a voltage change during charge and/or discharge.

## Claims

1. A method of manufacturing a dry electrode, comprising:
providing a first positive electrode active material (AM1) represented by Chemical Formula 1,
a second positive electrode active material (AM2) represented by Chemical Formula 2, a dry binder (BND), and a dry conductive material (CDM);
forming a first mixture by mixing a first portion of the first positive electrode active material (AM1), the second positive electrode active material (AM2), the dry conductive material (CDM), and the dry binder (BND);
forming a second mixture by mixing a second portion of the first positive electrode active material (AM1) with the first mixture;
forming a positive electrode active material layer (AML) by forming a film from the second mixture; and
performing a lamination of the positive electrode active material layer (AML) on a positive electrode current collector (COL),
wherein a ratio of a weight of the first portion to a total weight of the first portion and the second portion is in a range of 10% to 60%,
Chemical Formula 1 Liₐ₁Feₓ₁M₁₋ₓ₁PO_{4-b1}
wherein, in Chemical Formula 1, 0.80≤a1≤1.2, 0.950≤x1≤1.00, and 0≤b1≤0.05,
wherein, in Chemical Formula 1, M is at least one element selected from among Al, Ti, V, and Mg,
Chemical Formula 2 Liₐ₂Niₓ₂Co_{y2}D_{z2}O_{2-b2}
wherein, in Chemical Formula 2, 0.80≤a2≤1.2, 0.60≤x2≤0.95, 0≤y2≤0.3, 0≤z2≤0.4, 0≤b2≤0.05, and x2+y2+z2=1, and
wherein D is at least one element selected from Al and Mn.

2. The method as claimed in claim 1, wherein
the first positive electrode active material (AM1) has a first average particle diameter,
the second positive electrode active material (AM2) has a second average particle diameter, and
the second average particle diameter is greater than the first average particle diameter, wherein the average particle diameters are measured by a particle size analyzer.

3. The method as claimed in claim 1 or claim 2, wherein the dry binder (BND) comprises at least one selected from among polytetrafluoroethylene (PTFE), polyvinylidene fluoride-hexafluoropropylene copolymers, polyvinylidene fluoride, polyvinyl alcohol, polyacrylonitrile, carboxymethyl cellulose, starch, hydroxypropyl cellulose, cellulose, polyvinylpyrrolidone, polyethylene, polypropylene, ethylene-propylene-diene polymers (EPDM), sulfonated EPDM, styrene-butadiene rubbers, and fluoro rubbers.

4. The method as claimed in claim 1, wherein an average particle diameter of the grinded dry binder is in a range of 50 µm to 100 µm as measured by a scanning electron microscope.

5. The method as claimed in any one of claims 1 to 4, wherein an amount of the first positive electrode active material and the second positive electrode active material is 90 wt% to 99 wt% relative to a total weight of the positive electrode active material layer.

6. The method as claimed in any one of claims 1 to 5, wherein forming the positive electrode active material layer comprises performing a roll press on the second mixture.

7. The method as claimed in any one of claims 1 to 6, wherein forming the positive electrode active material layer is performed at a temperature of 25 °C to 150 °C under a pressure of 3 kilonewtons (kN) to 80 kN.

8. The method as claimed in any one of claims 1 to 7, wherein the positive electrode current collector comprises a coating layer on one surface or two opposite surfaces of the positive electrode current collector,
wherein the coating layer comprises a carbon-based material.

9. The method as claimed in any one of claims 1 to 8, wherein the lamination is performed at a temperature of 50 °C to 130 °C under a pressure of 3 kN to 40 kN.

10. The method as claimed in any one of the preceding claims,
wherein a weight ratio of the first positive electrode active material to the second positive electrode active material is in a range of 40:60 to 95:5.

11. The method of any one of the preceding claims, wherein the dry binder (BND) is grinded at a temperature of equal to or less than 10 °C prior to mixing.

12. A dry electrode obtained by the method according to any of the preceding claims.
